Europäisches Patentamt

(19) European Patent Office (11) Publication number: **0 007 746**

Office européen des brevets **B1**

(12) **EUROPEAN PATENT SPECIFICATION**

(45) Date of publication of patent specification: 05.05.82 (51) Int. Cl.³: **F 16 D 69/04**

(21) Application number: 79301370.7

(22) Date of filing: 11.07.79

(54) Brake lining carrier.

(30) Priority: 20.07.78 GB 3047978

(43) Date of publication of application:
06.02.80 Bulletin 80/3

(45) Publication of the grant of the patent:
05.05.82 Bulletin 82/18

(84) Designated Contracting States:
BE CH DE FR GB IT LU NL SE

(56) References cited:
GB - A - 1 493 062

(73) Proprietor: FERODO LIMITED
20 St. Mary's Parsonage
Manchester M3 2NL (GB)

(72) Inventor: Walsh, Peter
15 High View, Simmondley
Glossop, Derbyshire (GB)
Inventor: Percival, Roy
72 Horse Fair Avenue Chapel-en-le-Frith
Via Stockport Cheshire (GB)

(74) Representative: Hadfield, Robert Franklin et al,
20, St. Mary's Parsonage
Manchester M3 2NL (GB)

Courier Press, Leamington Spa, England.

Brake lining carrier.

This invention relates to brakes, and more particularly to that kind of brake which comprises a brake lining secured to a backing which is mounted in a carrier and is slidable forwards and backwards along a guideway in the carrier into and out of a working position in which it can be locked, and comprising a protuberance.

Brakes of the kind just described are used in rail vehicle brake systems, but are in principle usable in other systems, for example brake systems for road vehicles, including heavy goods vehicles. When a lining has become worn or otherwise defective, then by releasing the lock the backing can be slid backwards along the guideway and so quickly withdrawn, with the lining secured to it, from engagement with the carrier; quick replacement of a fresh lining-and-backing unit is thus facilitated. Where, however (as on the Continent), a given rail brake system requires a lining of a particular degree of friction ('high friction' or 'low friction'), then great care has to be taken that the fresh unit is of the right friction type; for the dimensions of each type are in substance identical.

One proposal intended to avoid the possibility of error during replacement is disclosed in U.K. Specification 1 493 062 and entails the use of a peg adjacent the entrance to the carrier guideway and off-set from its longitudinal axis, and a groove in the backing for co-operation with the peg. Thus, if it is intended that a carrier should be fitted only with a high-friction lining, then only that type of lining (or its backing, rather) would be provided with the cooperating groove, so that only that backing would be insertable into the guideway.

However, the provision of a groove in the backing involves extensive cutting, both of the metal of the backing and the organic material of the brake lining, and it is desirable to avoid such operations or at least reduce their extent.

The present invention provides a construction which dispenses with a groove in the backing for co-operation with a peg in order to prevent insertion of a backing not carrying the appropriate groove. Instead, the invention accepts for example that a low-friction backing may be inserted and slid forwards along the guideway of a carrier intended to operate only with a high friction lining, but prevents such a backing from assuming a working position and so makes it impossible for the locking means to be operated. If a maintenance man finds that he cannot lock the backing into working position, he will at once appreciate that he has put the wrong one in and can immediately withdraw it from the guideway.

According to the invention the protuberance is at the closed end of the guideway and registers with a cutaway portion of the forward end of the backing when the backing is in its working position. The protuberance thus allows the backing to be slid into working position, but prevents the sliding into working position of a backing whose forward end contains no such cutaway portion. In the latter case the locking means cannot then be operated.

The protuberance may take the form of a peg which projects from the floor or from the end wall of the guideway, or it may be integral with both the floor and the end wall.

The cutaway portion of the forward end of the backing may be a recess (straight-sided or arcuate) in that end, or it may be at a corner thereof. In the latter case, the protuberance is necessarily offset from the longitudinal.

It is preferred that the backing is locked in working position by locking means having a forwardly projecting member which, in the locking position, projects beyond the trailing edge of the backing and is situated at least partly between the plane of the backing and the plane of the lining. The forwardly projecting member preferably registers with a cutaway portion in the rear end of the backing.

According to a particularly preferred construction, the closed end of the guideway has a protuberance offset from the longitudinal axis of the guideway and the backing has its ends shaped so that, while not having line symmetry about said axis, it has rotational symmetry of order 2 about its centre; the protuberance and the backing ends being so inter-related that the protuberance prevents the sliding into working position of a backing which is the mirror image of said backing.

In the construction just described, the cutaway portion is preferably at a corner of the backing.

The invention will now be further described with reference to the accompanying drawings, in which:

Fig. 1 is a perspective view of a lining-and-backing unit of one form of brake according to the invention; and

Fig. 2 is a perspective view of a carrier for the unit of Fig. 1.

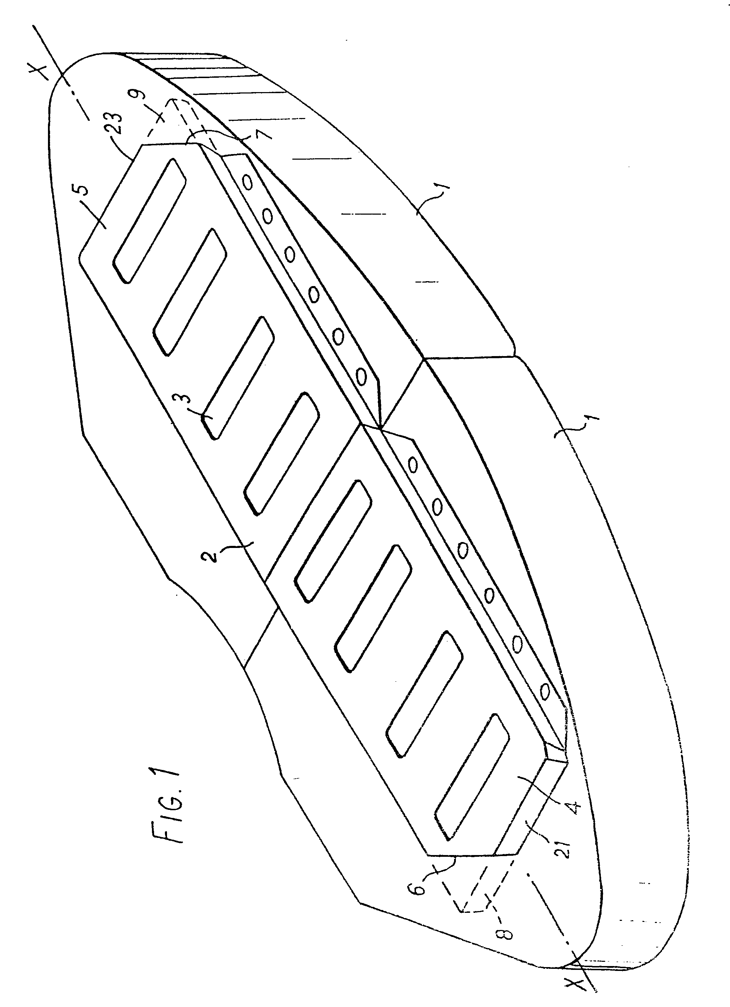

The brake comprises a friction lining 1 (Fig. 1) in two parts, each bonded to a metal backing 2 of dovetail cross section by a moulding operation carried out under very high pressure. The backing is keyed to the lining by tongues pressed out of the plane of the backing, leaving apertures 3 therein. The backing has its forward end 4 and its rear end 5 so shaped that, while not having line symmetry about line XX (which corresponds to the longitudinal axis of the carrier guideway to be described later), it has rotational symmetry of order 2 about its centre. That is to say, although that part of the backing above line XX in the drawing is not the mirror image of the part below the line, the backing can be superimposed upon itself by rotation about its centre through 180°. This property arises from the shaping of the ends of the backing as shown, with matching edges 6 and 7 diagonally opposite one another at the corners of the backing and diagonal to the direction of XX forming cutaway portions 8 and 9. The numerals 21 and 23 represent respectively the leading edge and the trailing edge of the backing.

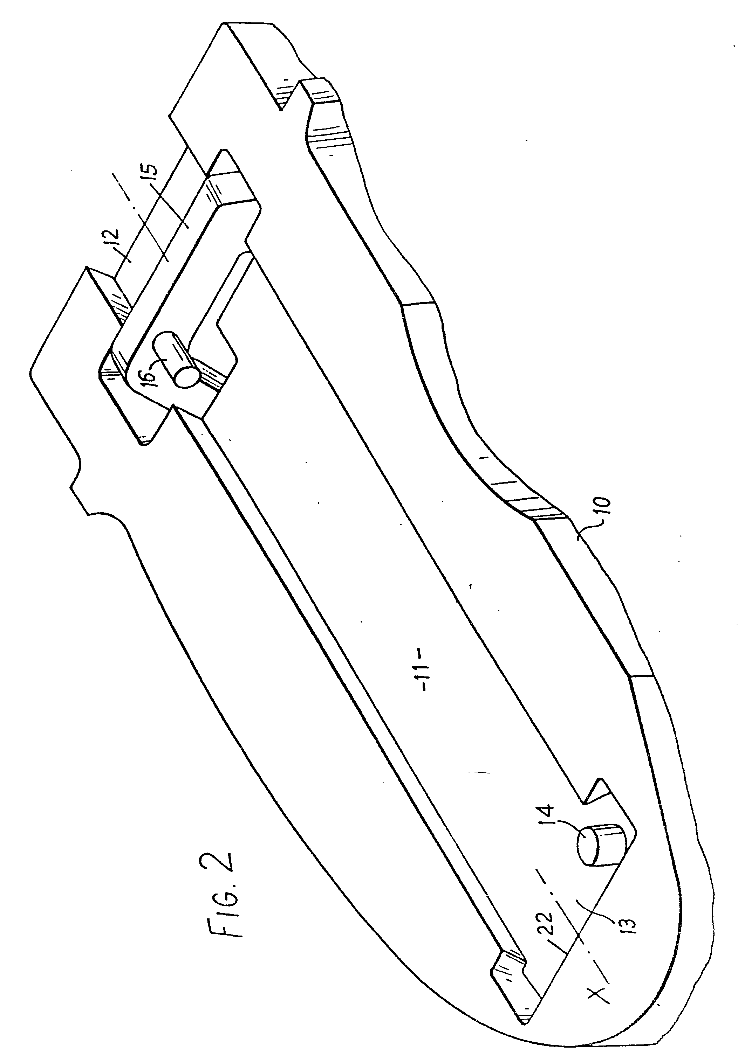

The brake includes a carrier 10 (Fig. 2) having a guideway 11 of dovetail cross section into whose entrance 12 the forward end 4 of backing 2 of lining 1 can be inserted. The closed end 13 of the guideway has a peg 14 offset from its longitudinal axis XX and adjacent the end wall 22 of the guideway; and adjacent the entrance to the guideway, the carrier has locking means formed by a pivotable plate 15 of a known type (pivot and locating pins, beneath the plane of the paper, are not shown) except that it has a forwardly projecting member in the form of a peg 16.

Suppose now that it is desired to use in the lining-and-backing unit shown in Fig. 1 a lining which is only of the high-friction type; then a low-friction lining would be used only with a backing which is the mirror image of that shown in Fig. 1. Additionally, the carrier for the low-friction lining and backing would be the mirror image of that shown in Fig. 2. The appropriate shaping for the friction lining can be moulded in during manufacture.

To assemble the two components shown in Figs. 1 and 2, the pivotable plate 15 of the carrier 10 is released from the lock position shown in Fig. 2, and forward end 4 of backing 2 of the unit shown in Fig. 1 is inserted into the entrance 12 of the carrier guideway 11. The backing is then slid along the guideway until the leading edge 21 abuts against the end wall 22 of the guideway. The backing is now in its working position i.e. with the lining 1 secured to it brought to that position which is appropriate for engagement with whatever moving part of the vehicle is to be acted on, for example the disc of a disc brake system. In this working position, the peg 14 registers with the cutaway portion 8, which is bounded by the end wall 22 of the guideway and the edge 6 of the backing diagonal to the longitudinal axis XX of the guideway. Pivot plate 15 is then swung into the position shown in Fig. 2, in which the projection 16 projects forwardly beyond the trailing edge of the backing and is at least partly between the plane of the backing and the plane of the lining i.e. in register with the cutaway portion 9 in Fig. 1; one then locks the plate into position. If, as through carelessness, the backing is not pushed far enough so as to abut against the end wall 22 of the guideway, then locking means 15 cannot be made to operate because the projection 16 will be stopped by part of the backing. If, however, the 'wrong' backing i.e. one being the mirror image of that shown in Fig. 1, is inserted into guideway 11, it cannot be slid into engagement with end wall 22 of the guideway because peg 14 stops such movement by engaging the leading edge of the mirror image backing, in the region indicated by 8 in Fig. 1; and again, locking means 15 cannot be made to operate.

## Claims

1. A brake comprising a brake lining (1) secured to a backing (2) which is mounted in a carrier (10) and is slidable forwards and backwards along a guideway (11) in the carrier into and out of a working position in which it can be locked, and comprising a protuberance (14) characterised in that the protuberance (14) is at the closed end (13) of the guideway and registers with a cutaway portion (8) in the forward end (4) of the backing (2) when the backing is in said working position.

2. A brake according to claim 1, characterised in that the protuberance (14) is offset from the longitudinal axis (XX) of the guideway, and the backing (2) has its ends (4, 5) shaped so that, while not having line symmetry about said axis, it has rotational symmetry of order 2 about its centre; the protuberance (14) and the backing ends (4, 5) being so inter-related that the protuberance (14) prevents the sliding into working position of a backing which is the mirror image of said backing (2).

3. A brake according to claim 1 or 2, characterised in that the cutaway portion in the backing (2) is at a corner (6) of the backing.

4. A brake according to any preceding claim, characterised in that the backing (2) is locked in working position by locking means (15) having a forwardly projecting member (16) which, in the locking position, projects beyond the trailing edge (23) of the backing (2) and is situated at least partly between the plane of the backing (2) and the plane of the lining (1).

5. A brake according to claim 4 characterised in that the forwardly projecting member (16) registers with a cutaway portion (9) in the rear end (5) of the backing.

## Revendications

1. Frein comprenant une garniture de frein (1) fixée à un support (2) qui est monté dans un organe porteur (10) et peut coulisser à va-et-vient le long d'une glissière (11) de l'organe porteur pour prendre et quitter une position active dans laquelle il peut être verrouillé, et comprenant une protubérance (14), caractérisé en ce que la protubérance (14) est à l'extrémité fermée (13) de la glissière et coïncide avec une partie retranchée (8) de l'extrémité avant (4) du support (2) quand le support est dans ladite position active.

2. Frein selon la revendication 1, caractérisé en ce que la protubérance (14) est décalée par rapport à l'axe longitudinal (XX) de la glissière, et le support (2) a ses extrémités (4, 5) façonnées de sorte que, tout en n'ayant pas de symétrie par rapport audit axe, il a une symétrie de rotation d'ordre 2 autour de son centre; la protubérance (14) et les extrémités du support (4, 5) étant liées par une relation telle que la protubérance (14) empêche de glisser en position active un support qui est l'image spéculaire dudit support (2).

3. Frein selon la revendication 1 ou 2, caractérisé en ce que la partie retranchée du support (2) est située à un coin (6) du support.

4. Frein selon l'une quelconque des revendications précédentes, caractérisé en ce que le support (2) est verrouillé en position active par un moyen de verrouillage (15) ayant un élément saillant vers l'avant (16) qui, dans la position de verrouillage, fait saillie au-delà du bord arrière (23) du support (2) et situé en partie au moins entre le plan du support (2) et le plan de la garniture (1).

5. Frein selon la revendication 4, caractérisé en ce que l'élément saillant vers l'avant (16) coïncide avec une partie retranchée (9) de l'extrémité arrière (5) du support.

## Patentansprüche

1. Bremse mit einem an einer Unterlagsschicht (2) befestigten Bremsbelag (1), wobei die Unterlagsschicht an einem Träger (10) befestigt und auf diesem vorwärts und rückwärts auf einer Führungsbahn (11) auf dem Träger verschiebbar ist in eine Arbeitsstellung und aus einer Arbeitsstellung heraus, wobei die Unterlagsschicht in der Arbeitsstellung verriegelt werden kann, und mit einem Vorsprung (14), dadurch gekennzeichnet, daß der Vorsprung (14) am geschlossenen Ende (13) der Führungsbahn (14) vorgesehen ist und in einen abgeschnittenen Bereich (8) am vorderen Ende (4) der Unterlagsschicht (2) hineinpaßt, wenn die Unterlagsschicht die Arbeitsstellung einnimmt.

2. Bremse nach Anspruch 1, dadurch gekennzeichnet, daß der Vorsprung (14) neben der Längsachse (XX) der Führungsbahn liegt, daß die Enden (4, 5) der Unterlagsschicht (2) so ausgebildet sind, daß sie nicht achssymmetrisch zu der Längsachse sind, sondern rotationssymmetrisch zweiter Ordnung um den Mittelpunkt, daß der Vorsprung (14) und die Enden (4, 5) der Unterlagsschicht (2) so in Wechselbeziehung zueinander stehen, daß der Vorsprung (14) verhindert, daß eine Unterlagsschicht in die Arbeitsstellung geschoben werden kann, welche eine Form aufweist, die spiegelbildlich ist zu der Form der Unterlagsschicht (2).

3. Bremse nach Anspruch 1 oder 2, dadurch gekennzeichnet, daß der abgeschnittene Bereich der Unterlagsschicht (2) an der Ecke (6) der Unterlagsschicht vorgesehen ist.

4. Bremse nach einem der vorherstehenden Ansprüche, dadurch gekennzeichnet, daß die Unterlagsschicht (2) in der Arbeitsstellung durch eine Verriegelungseinrichtung (15) verriegelt ist, wobei die Verriegelungseinrichtung ein nach vorn gerichtetes vorstehendes Teil (16) aufweist, welches in der Verriegelungsstellung hinter der Hinterkante (23) der Unterlagsschicht (2) hervorragt und zum Teil zwischen der Ebene der Unterlagsschicht (2) und der Ebene des Bremsbelags (1) verläuft.

5. Bremse nach Anspruch 4, dadurch gekennzeichnet, daß das nach vorn abragende Teil (16) in einen abgeschnittenen Bereich (9) am hinteren Ende (5) der Unterlagsschicht hineinragt.

FIG.1

FIG. 2

-11-

22
X
13
14
10
16
12
15